# EUROPÄISCHE PATENTSCHRIFT

(11) **EP 3 620 659 B1**
(45) Veröffentlichungstag und Bekanntmachung des Hinweises auf die Patenterteilung: **28.04.2021**
(21) Anmeldenummer: 18192835.9
(22) Anmeldetag: 05.09.2018
(51) Int. Cl.: F04D 19/04, F04D 29/60, F04D 29/66, F16F 15/08

(54) **BEFESTIGUNGSVORRICHTUNG, PUMPE, PUMPENAUFBAU**
FASTENING DEVICE, PUMP, PUMP STRUCTURE
DISPOSITIF DE FIXATION, POMPE, MODULE DE POMPE

(43) Veröffentlichungstag der Anmeldung: 11.03.2020
(73) Patentinhaber: PFEIFFER VACUUM GMBH, 35614 Asslar (DE)
(72) Erfinder: Donner, Jonathan, 35753 Greifenstein (DE); Kessler, Michael, 35753 Greifenstein (DE)
(74) Vertreter: Manitz Finsterwald Patent- und Rechtsanwaltspartnerschaft mbB

(56) Entgegenhaltungen:
- EP-A1- 3 059 450
- WO-A1-2017/167393
- CN-U- 207 583 666
- DE-U1- 9 001 324
- US-A- 4 141 527
- US-A- 6 029 942

## Beschreibung

Die vorliegende Erfindung betrifft eine Befestigungsvorrichtung, eine Pumpe und einen Pumpenaufbau.

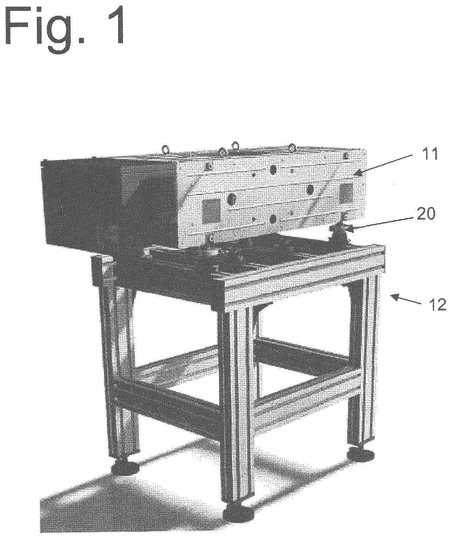

In gewissen Zusammenhängen ist es regelmäßig nötig, Vorrichtungen schnell, zuverlässig und präzise zu montieren, obwohl sie schwer und sperrig sind. Die Montage muss gegebenenfalls auch hohe Betriebskräfte einschließlich Vibrationen aufnehmen können. Ein typisches Beispiel hierfür ist die Montage von Pumpen, insbesondere Vakuumpumpen, auf Prüfständen. Fig. 1 zeigt ein typisches Beispiel. 11 ist eine Vakuumpumpe, die in einem gewissen Kontext verwendet werden soll. Der Kontext kann beispielsweise eine vorübergehende experimentelle Verwendung sein oder eine Prüfung der Pumpe oder ihre Justierung oder ähnliches.

In solchen Kontexten ist es nötig, die Gerätschaften, z. B. eine Vakuumpumpe, geeignet zu positionieren und festzuhalten. Hierfür kann beispielsweise ein Gestell 12 oder ein Tisch oder ähnliches vorgesehen sein. Die Pumpe kann mit einem Kran oder einem Manipulator an einem Arm hängend herangefahren werden und dann allmählich auf das Gestell 12 abgesenkt werden. In bisheriger Bauweise folgt dann ein umständliches Verschrauben der Pumpe 11 mit dem Gestell 12.

Die WO 2017/167393 A1 beschreibt eine Pumpenanordnung, der mittels zweier Formschlussverbindungen und einer Schraubverbindung an einer Motorkomponente befestigbar ist. Eine Formschlussverbindung weist einen Stift, eine Bohrung und einen zwischen beiden liegenden Dämpfer auf.

Die US 6029942 beschreibt eine Kompressorbefestigung mit einem durchbohrten zylindrischem Kolben und einem Bolzen.

Die DE 90 01 324 U1 beschreibt eine Befestigungsvorrichtung für einen Verdichter mit einem verformbaren Element zwischen dem Verdichter und einem tratgenden Boden.

Aufgabe der Erfindung ist es, eine Befestigungsvorrichtung anzugeben, mit der eine Vorrichtung schnell, zuverlässig und präzise an einer Einrichtung montiert werden kann. Außerdem soll eine Pumpe für eine solche Vorrichtung und ein Pumpenaufbau mit einer solchen Vorrichtung angegeben werden.

Die oben genannte Aufgabe wird mit den Merkmalen der unabhängigen Ansprüche gelöst. Abhängige Patentansprüche sind auf bevorzugte Ausführungsformen der Erfindung gerichtet.

Da sich die beschriebene Problematik nicht nur im Kontext von Vakuumpumpen und deren Verwendung stellt, ist die Erfindung allgemein in Bezug auf die Verbindung zweier Gerätschaften beschrieben, die in allgemeiner Weise und zur gegenseitigen Unterscheidung "Vorrichtung" und "Einrichtung" genannt werden.

Die Befestigungsvorrichtung zur Befestigung einer Vorrichtung an einer Einrichtung weist die Merkmale des Anspruchs 1 oder des Anspruchs 2 auf. Sie hat einen bei Verwendung vorrichtungsseitigen ersten Teil und einen bei Verwendung einrichtungsseitigen zweiten Teil. Die beiden Teile können jeweils an der Vorrichtung bzw. Einrichtung schon angebracht sein oder lösbar oder unlösbar mit ihnen verbunden oder verbindbar sein. Der vorrichtungsseitige erste Teil hat einen ersten Oberflächenbereich, der der Einrichtung zugewandt ist. Der einrichtungsseitige zweite Teil hat einen zweiten Oberflächenbereich, der der Vorrichtung und dem ersten Oberflächenbereich des ersten Teils zugewandt ist. Eines der zwei Teile weist einen dem anderen Teil zugewandten Zentrierzapfen auf. Das andere der zwei Teile weist eine entsprechende Zentrieröffnung auf, in die der Zentrierzapfen zum Ausrichten der zwei Teile eindringen kann. Aus einer der zwei Oberflächenbereiche sind eine oder mehrere Dämpfungselemente angebracht, die dann, wenn die beiden Teile miteinander verbunden sind, zwischen den zwei Oberflächenbereichen zu liegen kommen und zwischen ihnen gequetscht gehalten werden. Außerdem ist ein Spannelement vorgesehen, um die zwei Teile aufeinander ausgerichtet so einzuspannen, dass sie aufeinander zu gedrückt gehalten werden. Die Ansprüche 1 und 2 nennen weitere Merkmale.

Auf diese Weise können die zwei Teile schnell präzise ausgerichtet miteinander verbunden werden. Die Dämpfungselemente aus nachgiebigem Material erlauben geringe Varianzen in der Ausrichtung der Komponenten, was besonders dann vorteilhaft ist, wenn mehrere der Befestigungsvorrichtungen zwischen einer Einrichtung und einer Vorrichtung verwendet werden. Mit dem Spannelement kann die Verbindung schnell hergestellt werden, so dass umständliche Montagemaßnahmen entfallen.

Das Spannelement kann handbetätigbar sein, so dass kein Werkzeug benötigt wird, wenn die Befestigungsvorrichtung verspannt wird. Das Befestigen und Lösen kann dann von Hand erfolgen.

Der Zentrierzapfen und die Zentrieröffnung können zueinander formschlüssige und/oder komplementär ausgebildete Oberflächenbereiche aufweisen. Der Formschluss kann mit konkav bzw. konvex konisch geformten Bereichen und/oder mit konkav bzw. konvex zylindrisch geformten Bereichen erfolgen. Im erstgenannten Fall bildet der Formschluss zwischen Zapfen und Öffnung dann auch einen Anschlag der Einführbewegung. Im letztgenannten Fall liegt kein Anschlag in Einführrichtung vor. Der Anschlag kann dann durch das nachgiebige Material gebildet werden. Der Zentrierzapfen kann mindestens bereichsweise zylindrischen Querschnitt haben und hat vorzugsweise auch einen sich zum distalen Ende hin konisch verjüngenden Bereich. Auf diese Weise ist es einfach möglich, den Zentrierzapfen in die Zentrieröffnung einzufügen. Prinzipiell können der zylindrische Teil und der konische Teil beliebige Querschnittsform haben, solange ein hinreichend definierter Formschluss der aneinander anliegenden Flächen gegeben ist. Es bieten sich quadratische, rechteckige oder kreisförmige Querschnitte an.

Vorzugsweise steht der Zentrierzapfen aus einem der zwei genannten Oberflächenbereiche heraus und ist von ihm umgeben. Vorzugsweise liegt die Zentrieröffnung im anderen der zwei Oberflächenbereiche und ist auch von ihr umgeben. Es kann sich bei dem ersten Teil und dem zweiten Teil allgemein um ein rotationssymmetrisches Bauteil handeln. Zentrierzapfen und Zentrieröffnung können koaxial zur Rotationsachse liegen.

Es sind aber auch andere Ausführungsformen denkbar, etwa solche, bei denen mehrere Zentrierzapfen und entsprechend mehrere Zentrieröffnungen an unterschiedlichen Stellen des ersten Teils bzw. des zweiten Teils vorgesehen sind, etwa indem sie über die jeweiligen Oberflächenbereiche verteilt ausgebildet sind. Es ist dabei auch möglich, in einem Oberflächenbereich sowohl einen oder mehrere Zentrierzapfen als auch eine oder mehrere Zentrieröffnungen vorzusehen, und auf den anderen Oberflächenbereich dementsprechend komplementäre Zentrierzapfen und Zentrieröffnungen vorzusehen.

Jedes der genannten Teile hat einen tellerartigen Bereich, dessen Oberfläche, die dem anderen Teil zugewandt ist, den genannten Oberflächenbereich bildet und den Zentrierzapfen bzw. die Zentrieröffnung beinhalten kann. Der Teller kann allgemein gesprochen in Draufsicht beliebige Grundrissform haben, etwa viereckig, sechseckig, oval, rund oder kreisförmig. Der Teller des gegenüberliegenden Teils kann in etwa oder genau deckungsgleich in Draufsicht gebildet sein. Auf den dem Zentrierzapfen bzw. der Zentrieröffnung gegenüberliegenden Seiten der jeweiligen Teller weisen das erste Teil bzw. das zweite Teil Befestigungsmittel auf, mittels derer sie an der Einrichtung befestigt werden können. Dieses Befestigungsmittel kann etwa ein Gewindebolzen sein, der an dem Teller angebracht ist. Ein Gewindebolzen stellt hierbei eine lösbare Verbindung dar. Es sind aber auch nicht lösbare Verbindungen denkbar, so dass das erste bzw. das zweite Teil dauerhaft fest an der Einrichtung bzw. Vorrichtung angebracht bzw. zusammen mit ihr ausgebildet sind.

Das Spannelement kann eine Schelle aufweisen, die in Umfangsrichtung gesehen zumindest bereichsweise um die Ränder der zwei Teller herum greift. Die Schelle weist ein Verstellelement auf, um Schellenbereiche radial einwärts zu ziehen, um auf diese Weise, wie weiter unten noch erläutert wird, die zwei Teile fest und gut ausgerichtet miteinander zu verspannen.

Insbesondere kann das Verstellelement die Länge der Schelle in Umfangsrichtung verstellen, so dass auf diese Weise mittelbar Schellenbereiche nach radial innen (bei Verkürzung) oder radial außen (bei Verlängerung) gelangen und so das Einspannen bzw. Freigeben der zwei Teile bewirken.

Insbesondere weist die Schelle einen ersten Hintergriff auf, der den Rand des ersten Tellers hintergreift (also zwischen Teller und Vorrichtung eingreift), und einen zweiten Hintergriff, der den Rand des zweiten Tellers hintergreift (also zwischen zweitem Teller und Einrichtung eingreift). Klammerartig hält dann die Schelle die Teller der zwei Teile aneinander fest.

Einer der Hintergriffe und/oder einer der von den Hintergriffen berührten Randbereiche der Teller weist dabei eine Anschrägung auf, so dass sich im Zusammenwirken des Hintergriffs und der Randbereiche eine Keilwirkung ergibt, die dazu führt, dass beim radial einwärts ziehen der Schelle die zwei Teller aufeinander zu bewegen, und umgekehrt.

Die Schelle kann zwei oder drei oder vier oder mehr kreissektorförmige Schenkel oder Glieder aufweisen, die kettenartig beweglich miteinander verbunden sind, und die an mindestens einer Stelle der Kette eine Spanneinrichtung aufweisen mittels derer die gesamte Länge der Kette verkürzt oder verlängert werden kann. Beim Verkürzen ergibt sich mittelbar ein Einzug der Schenkel bzw. Kettenglieder nach radial innen. Zusammen mit der genannten Anschrägung ergibt sich dann eine Anpresswirkung für die beiden Teller relativ zueinander.

Die Spanneinrichtung kann ähnlich einem Schnappverschluss ausgebildet sein. Es kann sich aber auch um eine Schraube oder um eine Mutter handeln, insbesondere um eine Flügelschraube oder Flügelmutter, die handbetätigbar ist, so dass die gesamte Spanneinrichtung handbetätigbar ist und kein Werkzeug benötigt wird, um die eigentliche Befestigung vorzunehmen.

Vorzugsweise ist das erste Teil an die Vorrichtung anschraubbar und von ihr abschraubbar. Vorzugsweise geschieht dies so, dass die Vorrichtung ein Innengewinde aufweist, in das ein Schraubbolzen des ersten Teils der Befestigungsvorrichtung einschraubbar ist. Sinngemäß das Gleiche gilt für die Einrichtung. Vorzugsweise weist auch sie ein Innengewinde auf, in das das Außengewinde eines Gewindebolzen am zweiten Teil einschraubbar ist.

Das nachgiebige Material kann Kunststoffmaterial sein. Es kann elastisch verformbarer Kunststoff sein, etwa entsprechend einem Dichtungsring. Die Elastizitätskonstante und Dimensionierung wird dabei geeignet gewählt. Das nachgiebige Material kann den Zentrierzapfen bzw. die Zentrieröffnung umgebend vorgesehen sein. Es kann an einem der beiden Teile fest angebracht sein, etwa in eine Nut in einem der Oberflächenbereiche eingedrückt oder eingeklebt sein. Wenn die zwei Teile dann bei der Befestigung aufeinander zu gepresst werden, wird das nachgiebige Material dementsprechend verpresst und stellt sicher, dass keine mechanische Überbestimmung vorliegt.

Nachfolgend werden Bezug nehmend auf die Zeichnungen Ausführungsformen beschrieben, es zeigen
- Fig. 1: eine Vorrichtung mit Gestell,
- Fig. 2: eine Befestigungsvorrichtung als Explosionszeichnung,
- Fig. 3: schematisch Ausführungsformen des ersten und zweiten Teils und der Schelle,
- Fig. 4: schematisch eine Draufsicht und
- Fig. 5: eine weitere Ausführungsform einer Befestigungsvorrichtung.

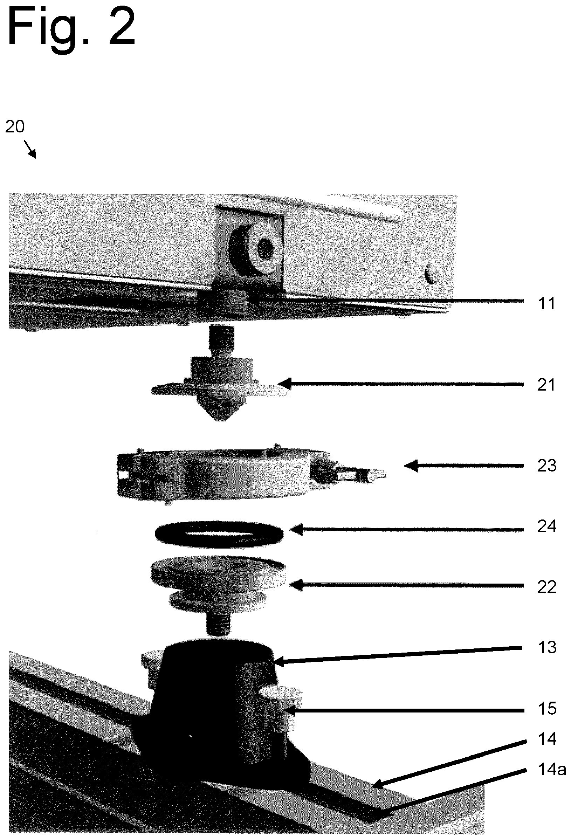

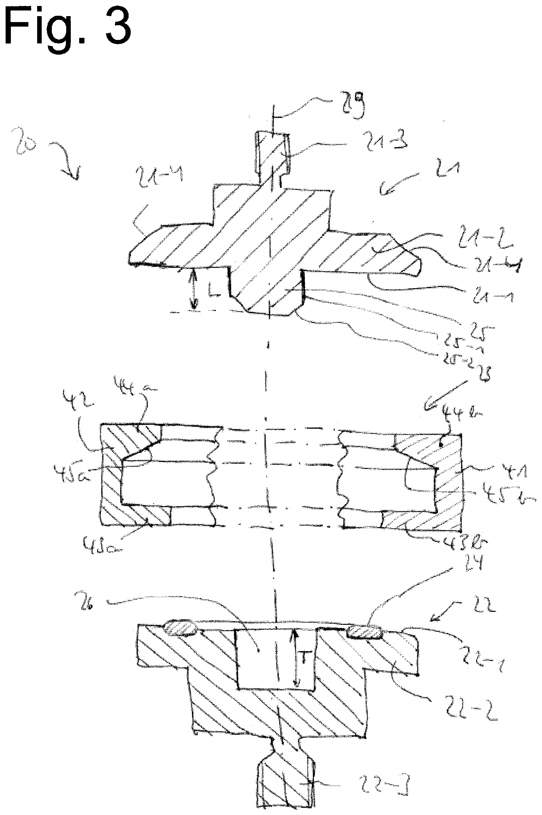

Fig. 2 zeigt die Befestigungsvorrichtung 20 bestehend aus Einzelteilen 21 bis 24 als Explosionszeichnung zwischen Vorrichtung 11 und Einrichtung 12. Figur 3 zeigt Einzelheiten dazu.

Vorrichtungsseitig ist das erste Teil 21 vorgesehen, das an der Vorrichtung 11 befestigbar oder befestigt ist oder auch fest in sie integriert/eingebaut sein kann. Es hat einen der Einrichtung 12 zugewandten ersten Oberflächenbereich 21-1. Er kann plan sein oder jedenfalls plane Bereiche aufweisen. Einrichtungsseitig ist das zweite Teil 22 vorgesehen, das an der Einrichtung 12 befestigbar oder befestigt ist oder auch in sie fest integriert/eingebaut sein kann und das am ersten Teil 21 befestigt bzw. befestigbar ist und einen der Vorrichtung 11 und dem ersten Oberflächenbereich 21-1 zugewandten zweiten Oberflächenbereich 22-1 aufweist. Er kann (in etwa) plan sein oder jedenfalls plane Bereiche aufweisen, die parallel zu (in etwa) planen Bereichen des ersten Oberflächenbereichs 21-1 verlaufen können.

Statt (teilweise) plan und planparallel können die zwei Oberflächenbereiche 21-1, 22-1 auch (bereichsweise) zueinander in etwa formschlüssig ausgebildet sein. Da bei Befestigung der zwei Teile 21, 22 aneinander das nachgiebige Dämpfungselement 24 dazwischen zu liegen kommt, müssen die Oberflächenbereiche 21-1, 22-1 nur in etwa aneinander angepasst werden.

Die zwei Teile 21, 22, können tellerförmige Bereiche 21-2, 22-2 aufweisen, deren einander zu gewandten Oberflächen die zwei genannten Oberflächenbereiche 21-1, 22-1 tragen können. Die Kontur der Teller 21-2, 22-2 in Draufsicht (längs Achse 29 in Figur 3) kann jeweils eckig oder rund oder kreisförmig sein. Die Konturen können zueinander deckungsgleich sein. Wie schon gesagt können die tellerförmigen Bereiche 21-2, 22-2 auch integrale Bestandteile der Vorrichtung 11 bzw. der Einrichtung 12 sein.

Eines der zwei Teile (z. B. 21) weist einen aus dem ersten Oberflächenbereich 21-1 heraus ragenden fest angebrachten oder anbringbaren und entfernbaren Zentrierzapfen 25 und das andere der zwei Teile (z. B. 22) mindestens eine entsprechende Zentrieröffnung 26 auf, in die der Zentrierzapfen 25 zur Ausrichtung der zwei Teile eindringen kann. Auf einem der zwei Oberflächenbereiche sind ein oder mehrere Dämpfungselemente 24 aus nachgiebigem Material angebracht, die bei Befestigung auf dem anderen der zwei Oberflächenbereiche zur Anlage kommen. Außerdem ist ein Spannelement 23 vorgesehen zum gemeinsamen Einspannen der zwei Teile 21, 22 so, dass sie ausgerichtet und aufeinander zu gepresst gehalten werden.

Der Zentrierzapfen 25 hat einen zur Zentrieröffnung 26 formschlüssigen Oberflächenbereich. Er kann konvex konisch 25-2 und/oder zylindrisch 25-1 geformt sein kann, insbesondere kreiskonisch oder kreiszylindrisch. Dementsprechend konkav ist die Zentrieröffnung 26 ausgebildet. Einer Konusfläche 25-2 des Zapfens muss nicht notwendigerweise eine Konusfläche der Zentrieröffnung entsprechen. Die Konusfläche 25-2 des Zapfens kann auch rein als Einführhilfe gedacht sein, und die Ausrichtung wird durch formschlüssige Zylindermantelflächen 25-1 bewirkt.

Die überstehende Länge L des Zentrierzapfens 25 kann kürzer sein als die Tiefe T der Zentrieröffnung 26, oder kann um ein geringes länger der Art sein, dass durch die überschießende Länge L gegenüber der Tiefe T die maximale Kompression des Dämpfungselements 24 bestimmt ist.

21-3 und 22-3 sind Befestigungsmittel, mit denen die zwei Teile 21, 22 an der Vorrichtung 21 bzw. Einrichtung 22 befestigbar sind. Es kann sich um Gewindestutzen handeln, vorzugsweise Außengewinde, die an den rückwärtigen Flächen der Teller 21-2 und 22-2 angesetzt sein können und die in entsprechende Gegengewinde an Vorrichtung 21 bzw. Einrichtung 22 eingeschraubt werden. Die Gewinde können zueinander gleichläufig oder zueinander gegenläufig sein.

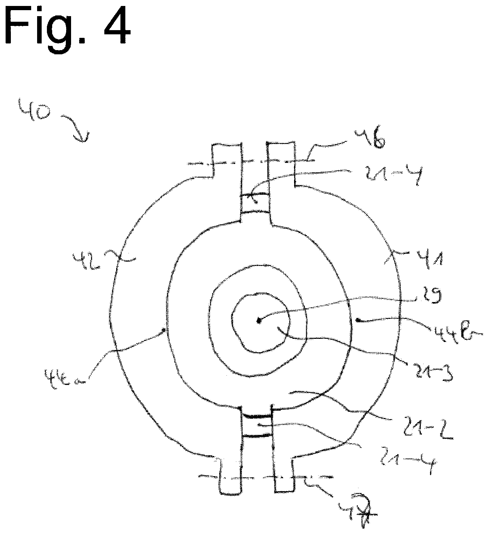

Das Spannelement 23 kann eine die zwei Teile 21, 22 umfangende und aufeinander zu zwingende mehrgliedrige Schelle 40 aufweisen, wie sie ausführlicher in Figur 4 gezeigt ist. Sie kann in Umfangsrichtung gesehen zumindest bereichsweise um die Ränder der zwei Teller 21-2, 22-2 herum greifen und ein oder mehrere Verstellelemente 46, 47 aufweisen, um die Lage der Schelle in Radialrichtung der Teller 21-2, 22-2 ändern zu können. Wenigstens eine der Flächen kann darüber hinaus keilartig schräg gebildet sein, so dass beim Zusammenziehen des Spannelements 23 in Umfangsrichtung mittels der Verstellelemente/Flügelschrauben 46, 47 auch eine zusammenpressende Kraft in axialer Richtung entsteht.

Mit 41 und 42 sind zwei Glieder oder Schenkel der zweigliedrigen Schelle 40 gezeigt, die mittels Verstellelementen 46, 47, etwa Flügelschrauben an entsprechenden Anlageflächen und in entsprechenden Gewinden, aufeinander zu gezwungen oder wieder gegeneinander freigegeben werden können. Statt zwei Gliedern/Schenkeln 41, 42 können auch kettenähnlich mehrere Glieder (3, 4, 5 oder mehrere) vorgesehen sein. Jeder Schenkel 41, 42 hat Hintergriffe 43a, b, 44a, b, um die Ränder der zwei Teller 21-2, 22-2 wenigstens hintergreifen und in axialer Richtung (bzgl. Achse 29) halten zu können.

Beim Befestigen der Teile 21, 22 der Befestigungsvorrichtung 20 aneinander kommen dann insgesamt - bei der Ausrichtung der Figur 3 - die oberen Oberflächen der Hintergriffe 43a, 43b an der unteren Oberfläche des Rands des Tellers 22-2 des zweiten Teils 22 zur Anlage, und es kommen die Keilflächen 45a, 45b der Hintergriffe 44a, 44b auf der Keilfläche 21-4 des Tellers 21-2 des ersten Teils 21 zur Anlage.

Mittels Verstellelementen 46, 47 können Enden von Schenkeln bzw. Kettengliedern aufeinander zu gezogen oder wieder frei gegeben werden. Die Verstellelemente können im Interesse einer werkzeuglosen Montage handbetätigbare Rändelschrauben oder Flügelschrauben aufweisen. Der Rändel- oder Flügelschraubenkopf liegt am Ende eines der Glieder Schenkel (z. B. 42), wo die Schraubenachse etwa ein Durchloch durchlaufen kann. Am benachbarten Ende des benachbarten Glieds oder Schenkels (z. B. 41) gelangt der Schraubenschaft in ein Gewinde.

Beim Zusammenziehen der Enden der Schenkel 41 und 42 bzw. Glieder durch Einschrauben der Schrauben 46, 47 gleiten die Keilflächen 45a, 45b der Hintergriffe 44a, 44b auf die Keilfläche 21-4 des ersten Tellers 21-2 auf und zwingen diesen so nach unten auf den zweiten Teller zu, der aber von den Hintergriffen 43a, 43b gehalten wird, so dass eine Presswirkung entsteht, die das Dämpfungselement komprimiert.

Das Spannelement 23 kann ein oder mehrere Verstellelemente 46, 47 aufweisen. Es kann bspw. nur zwei Schenkel 41, 42 und eine einzige Flügelschraube vorgesehen sein. Zwei der Enden der Schenkel werden dann lediglich gelenkig zusammengehalten, während die zwei anderen mit der Flügelschraube aufeinander zu gespannt werden können. Aber es können auch beide Endenpaarungen mit Spannelementen versehen sein, wie in Figur 4 mit Bezugsziffern 46, 47 angedeutet. Und wenn das Spannelement mehrerer Glieder, z. b. vier, können symmetrisch verteilt auch mehrere Verstellelemente 46, 47 vorgesehen sein.

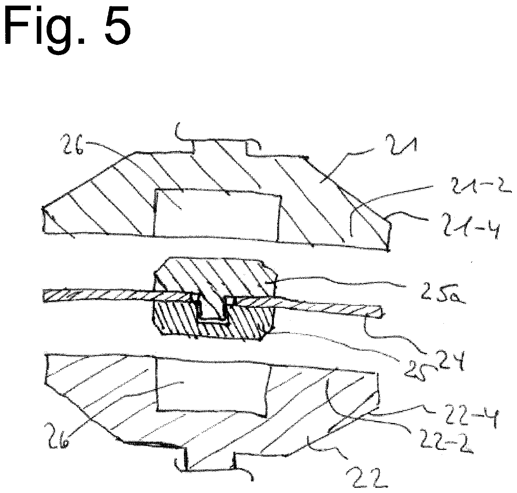

Varianten sind in Fig. 5 gezeigt. Der Zentrierzapfen 25 kann ein loses Bauteil sein, das in beide Teile 21, 22 in jeweilige Öffnungen 26 dort bei der Verwendung der Befestigungsvorrichtung 20 eingeführt wird. Es haben dann beide Teile 21 und 22 entsprechende Öffnungen 26. Vorzugsweise sind es kreisrunde Löcher, deren Tiefe an die Abmessung des Zapfens 25 jeweils angepasst ist. Erstes Teil 21 und zweites Teil 22 können dann beide ohne festen Zapfen mit einer Zentrieröffnung 26 und so im Wesentlichen baugleich ausgebildet sein.

Außerdem kann der Zapfen 25 eine Baueinheit mit dem Dämpfungselement 24 sein. Das Dämpfungselement kann beispielsweise ein flächiges Element sein, das am Zapfen 24 befestigt ist. Gezeigt ist in Fig. 5 eine Ausführungsform, bei der der Zapfen 25 aus zwei Teilen 25 und 25a besteht, die in axialer Richtung des Gesamtaufbaus getrennt sein, aber auch miteinander verschraubt werden können. Die Verschraubung durchdringt ein mittiges Loch im Dämpfungselement 24, so dass es beim Verschrauben der zwei Teile zwischen den beiden Hälften des Zapfens 25 eingeklemmt wird.

Die Teller 21-2, 22-2 und/oder der Zapfen 25 bzw. dessen Einzelteile 25, 25a können aus einem metallischen Material bestehen oder es aufweisen, etwa Eisen oder Stahl. Es kann aber auch gewünscht sein, die Befestigungsvorrichtung elektrisch isolierend auszuführen. Dann kann eine geeignete Isolierung vorgesehen sein, etwa indem wenigstens der Zapfen 25 und/oder ein oder beide Teller 21-2, 22-2, aus einem isolierenden Material, z. B. Kunststoff (Hartplastik), bestehen. Das Dämpfungselement 24 kann ein elastisches Gummimaterial oder ein Weichplastikmaterial sein und flächig und ggf. auch die Teller elektrisch isolierend ausgebildet sein.

Fig. 5 zeigt auch eine Ausführungsform, bei der beide Teile 21 und 22 Anschrägungen 21-4 und 22-4 aufweisen, auf die beim Spannen die Hintergriffe der Spannelement 23 aufgleiten können. Dieses kann dann gegengleich mit seinerseits zwei Schrägen an den beiden Hintergriffen 43 und 44 ausgebildet sein.

Bei der Verwendung der Ausführungsform nach Fig. 5 können dann die beiden Teile 21 und 22 zuerst mit ihrer jeweiligen Einrichtung 12 bzw. Vorrichtung 11 verbunden werden. Dann wird in eines der Teile mindestens einer der Vorrichtungen 20 der zugehörige Zapfen 25 eingefügt, der gegebenenfalls auch das Dämpfungselement 24 als Baueinheit mitbringt. Ist letzteres nicht der Fall, ist das Dämpfungselement separat an einem der Teile 21, 22 vorzusehen.

Der Gesamtaufbau aus Zapfen 25 und Dämpfungselement 24, wie er in Fig. 5 gezeigt ist, ist vorzugsweise symmetrisch bezüglich oben-unten in Fig. 5, so dass es keine Rolle spielt, wie herum er in eine der Öffnungen eingefügt wird. Wenn dieser Aufbau in eine der Öffnungen eingefügt wird, ist es vorzugsweise eine, in der er aufgrund der Gravitation gehalten wird, also in oben-unten-Richtungen normal betrachteter Aufbauten in das eher unten liegende Teil, wenn sich dies sagen lässt. Bei strikt horizontal ausgerichteten Teilen 21, 22 kann der Zapfen aber auch eingefügt werden. Wie gesagt ist er beidseits formschlüssig zu jeder der Öffnungen 26, so dass er auch aufgrund des Formschlusses hinreichend zuverlässig bis zur Verspannung der zwei Teile 21, 22 miteinander gehalten wird.

Wenn die gewünschte Anzahl von Zapfen 25 in die gewünschten Teile 21, 22 der unterschiedlichen Verbindungsvorrichtungen 20 eingefügt sind, wird weiter vorgegangen wie oben beschrieben, indem die Vorrichtung 11 oder Einrichtung 12 (z.B. die Vakuumpumpe) an ihr Gegenstück (zum Beispiel ein Gestell) herangeführt wird, etwa mittels eines Krans oder Manipulators, dann vorsichtig angenähert wird und zuletzt so herangeführt wird, dass die Zapfen 25 in der jeweiligen Öffnung 26 zu liegen kommen. Wenn dann insoweit ein genauer Sitz erreicht ist, werden die Spannelemente 23 wie beschrieben angebracht.

Statt einer die Tellerumfänge umspannenden Schelle sind aber auch andere Bauformen von Spannelementen 23 denkbar, beispielsweise Schrauben, mit denen die Teller 21-2, 22-2 aufeinander geschraubt werden können. Auch diese Schrauben können Flügelschrauben sein, so dass sie handbetätigbar sind. Einer der Teller weist dann ein Durchloch mit einem Durchmesser auf, der größer ist als der Durchmesser des Gewindes, das im gegenüberliegenden Teller ausgebildet ist.

Gegenstand der Erfindung ist auch eine Vorrichtung 11 oder Einrichtung 12, insbesondere eine Vakuumpumpe, die eine Vorrichtung 11 wie beschrieben ist und an der ein oder mehrere erste Teile 21 zur Bildung einer oder mehrerer Befestigungsvorrichtungen 20 wie beschrieben dauerhaft oder lösbar angebracht ist.

In einem Befestigungsverfahren kann dann so vorgegangen werden, dass eine oder vorzugsweise mehrere der beschriebenen Vorrichtungen 20 verwendet werden, und zwar derart, dass zunächst die ersten Teile 21 der Verbindungsvorrichtungen 20 an der Vorrichtung 11 befestigt werden (etwa eingeschraubt), wenn sie nicht schon (permanent) an der Vorrichtung 11 vorgesehen sind, dass weiterhin die zweiten Teile 22 an der Einrichtung 12 befestigt werden (etwa eingeschraubt), wenn sie nicht schon (dauerhaft) an der Einrichtung 12 vorgesehen sind, dass dann die Vorrichtung 11 geeignet vorsichtig an die Einrichtung 12 herangeführt wird, indem insbesondere der Zentrierzapfen 25 des einen Teils 21, 22 in die Zentrieröffnung 26 des anderen Teils 21, 22 eingeführt wird und die zwei Teile 21, 22 so weit aneinander herangeführt werden, wie dies ohne Einspannungen möglich ist, und dass dann mit dem Spannelement 23 die Einspannung vorgenommen wird, um unmittelbar die Teile 21, 22 und so mittelbar Vorrichtung 11 und Einrichtung 12 ausgerichtet und aufeinander zu gepresst zu halten.

Wenn bei diesem Verfahren mehrere der Befestigungsvorrichtungen 20 an jeweils mehreren Stellen der Vorrichtung 11 und Einrichtung 12 verwendet werden, können einige der Befestigungsvorrichtungen 20 ohne Zentrierzapfen 25 ausgebildet sein bzw. verwendet werden, um mechanische bzw. geometrische Überbestimmungen der Befestigungsvorrichtungen untereinander zu vermeiden. Dementsprechend können dann einige der Befestigungseinrichtungen 20 beispielsweise nur aus zwei gegenüberliegenden Teilen 21, 22 ohne Zapfen 25, aber mit Zentrieröffnung 26 aufgebaut sein, die mit einem Spannelement 23 verspannt werden.

Es können aber auch eines oder mehrere der Teile 21, 22 über eine verschiebliche Aufnahme 13 an der Vorrichtung 11 und/oder Einrichtung 12 angebracht/angeschraubt werden. Beispielhaft ist dies in Figur 2 unten an der Einrichtung 12 gezeigt, die z. B. ein Montagestell oder ein Teststand sein kann.

14 symbolisiert eine längliche Gleitschiene, die an der Einrichtung 12 angebracht ist bzw. anbringbar ist und auch entfernbar sein kann. Sie weist eine geeignet konturierte Längsnut 14a auf, z. B. eine Nut mit "T"-Profil ("T-Nut").. Längs der Gleitschiene 14 kann ein Gleiter 13 verschoben werden, der insbesondere in der Nut 14a durch einen geeignet geformten, nicht dargestellten Gleitschuh (mit formschlüssigem bzw. komplementärem Profil, z. B.T-Profil) gehalten und geführt wird. Am Gleiter 13 ist das zweite Teil 22 anbringbar, etwa über das Gewinde 22-3 einschraubbar. Der Gleiter 13 kann an der Gleitschiene 14 über eine Fixiereinrichtung 15 festlegbar/fixierbar sein. Es kann sich bspw. um eine in den Gleiter 13 einschraubbare und auf die Gleitschiene 14 auflaufende Klemmschraube handeln. Damit die Montage werkzeuglos erfolgen kann, kann die Fixiereinrichtung 15 handbetätigbar sein, etwa als Rändelschraube oder Flügelschraube ausgeführt sein. Gleiter 13, Gleitschiene14 und ggf. Fixiereinrichtung 15 bilden dann eine Verstelleinrichtung für die mechanisch/geometrische Anpassung der Komponenten aneinander, die als Teil der Befestigungsvorrichtung 20 und insbesondere des bzw. der Befestigungsmittel 21-3, 22-3 angesehen werden kann.

In einer Gleitschiene 14 können mehrere Gleiter 13 mehrerer Befestigungsvorrichtungen 20 laufen. Eine Gleitschiene 14 kann ihrerseits in einer die Richtung der Gleitschiene 14 schneidende Richtung (Schnittwinkel 70° - 110°, 80° - 100°, vorzugsweise in etwa rechtwinklig dazu) verschieblich an der Einrichtung 12 bzw. Vorrichtung 11 angebracht sein. Oder es können die beiden gegenüber liegenden Teile 21, 22 einer Befestigungsvorrichtungen 20 an Gleitern angebracht sein, die längs unterschiedlicher (einander gegenüber leigender) Gleitschienen 14 an Vorrichtung 11 und Einrichtung 12 verschieblich sind, deren Richtungen sich schneiden (70° - 110°, 80° - 100°, vorzugsweise rechtwinklig). Die zumindest teilweise verschiebbaren Gleiter 13 können weiterhin ihrerseits nicht gezeigte Federungs- und/oder Dämpfungselemente enthalten, die eine gewissse Flexibilität ermöglichen.

An der Befestigungsvorrichtung 20 kann eine elektrische Durchkontaktierung zur Erdung der Vorrichtung 11 über die Einrichtung 12 vorgesehen sein. Die materialwahl kann so sein, dass die Befestigungsvorrichtung eine definierte Federsteifigkeit der Halterungen und/oder eine definierte Dämpfungscharakteristik der Halterung aufweist. Es können in einer Befestigungsvorrichtung Federelemente und/oder Dämpfungselemente und/oder Schwingungskompensationselemente vorgesehen sein, die passive oder aktiv elektrisch, hydraulisch oder pneumatisch bedarfsweise regelbar ausgelegt sein könen. Sensorik, zum Beispiel Schwingungs- bzw. Beschleunigungssensoren an verschiedenen Messpunkten können vorgesehen sein.

Die Einrichtung 12 kann weiterhin eine Überzahl an Haltepunkten für Besfestigungsvorrichtungen 20 besitzen, die je nach Anwendungsfall, Ausrichtung, Gewicht oder Baugröße der jeweiligen Vorrichtung 11 passend gewählt werden, so dass eine weitere Flexibilisierung des Prozesses gegeben ist. Für diesen Fall können eine, mehrere, insbesondere alle Haltepunkte der Einrichtung 12 codiert ausgeführt werden, zum Beispiel durch verschiedene Farben, Symbole, Nummerierungen oder auch verschiedene geometrische Ausführungsvarianten des Teils 22 im Schlüssel- Schloss-Prinzip. Hierdurch kann sichergestellt werden, dass bestimmte vorgenannte Charakteristika wie z.B. die Tragfähigkeit oder Steifigkeit einer jeweiligen Halterung der Einrichtung 12 immer passend zur jeweiligen Art der Vorrichtung 11 kombiniert werden.

Nachfolgend werden beispielhaft einige Maße angegeben, die vorliegen können, aber nicht müssen:

| | |
|---|---|
| Durchmesser/Kantenlänge Dt der Teller: | 20 mm < Dt < 120 mm |
| Durchmesser Dz des Zentrierzapfens: | 8 mm < Dz < 50 mm |
| Überstehende Länge L des Zentrierzapfens: | 5 mm < L < 40 mm |
| Gewinde Mx des Befestigungsmittels: | M4 < Mx < M20 |

In dieser Beschreibung sollen Merkmale auch dann als hintereinander kombinierbar angesehen werden, wenn ihre Kombination nicht ausdrücklich beschrieben ist. Merkmale, die in einer bestimmten Figur oder einem Anspruch oder einer Ausführungsform oder einem Kontext beschrieben sind, sollen auch aus dieser Figur oder diesem Anspruch oder diesem Kontext oder dieser Ausführungsform heraus lösbar verstanden werden und mit anderen Figuren, Kontexten, Ansprüchen oder Ausführungsformen kombinierbar verstanden werden, soweit das Herauslösen und das neu Kombinieren technisch sinnvoll ist.

### Bezugszeichenliste

- 11: Vorrichtung
- 12: Einrichtung
- 20: Befestigungsvorrichtung
- 21: erstes Teil
- 21-1: erster Oberflächenbereich
- 21-2: erster Teller
- 21-3: erstes Befestigungsmittel
- 21-4: Schräge
- 22: zweites Teil
- 22-1: zweiter Oberflächenbereich
- 22-2: zweiter Teller
- 22-3: zweites Befestigungsmittel
- 22-4: Schräge
- 23: Spannelement
- 24: Dämpfungselement
- 25: Zentrierzapfen
- 25a:
- 26: Zentrieröffnung
- 40: Schelle
- 41: erster Schenkel
- 42: zweiter Schenkel
- 43a, 43b: erster Hintergriff
- 44a, 44b: zweiter Hintergriff
- 45a, 45b: Schräge
- 46,47: Verstellelement

## Patentansprüche

1. Befestigungsvorrichtung (20) zur Befestigung einer Vorrichtung (11) an einer Einrichtung (12), mit
einem vorrichtungsseitigen ersten Teil (21), das an der Vorrichtung (11) befestigbar oder befestigt oder angebracht ist und einen der Einrichtung (12) zugewandten ersten Oberflächenbereich (21-1) aufweist,
einem einrichtungsseitigen zweiten Teil (22), das an der Einrichtung (12) befestigbar oder befestigt oder angebracht ist und das am ersten Teil (21) befestigt bzw. befestigbar ist und einen der Vorrichtung (11) und dem ersten Oberflächenbereich (21-1) zugewandten zweiten Oberflächenbereich (22-1) aufweist,
wobei eines der zwei Teile mindestens einen Zentrierzapfen (25) und das andere der zwei Teile mindestens eine entsprechende Zentrieröffnung (26), in die der Zentrierzapfen (25) zur Ausrichtung der zwei Teile eindringen kann, aufweisen,
wobei auf einem der zwei Oberflächenbereiche ein oder mehrere Dämpfungselemente (24) aus nachgiebigem Material, insbesondere aus einem elastischen Material, bevorzugt Kunststoff, angebracht sind, die bei Befestigung auf dem anderen der zwei Oberflächenbereiche zur Anlage kommen, und mit einem Spannelement (23) zum gemeinsamen Einspannen der zwei Teile so, dass sie ausgerichtet und aufeinander zu gepresst gehalten werden,
**dadurch gekennzeichnet, dass**
das erste Teil (21) einen ersten Teller (21-2) aufweist, der eckigen oder runden oder kreisförmigen Grundriss haben kann, dessen vorrichtungsabgewandte Seite den ersten Oberflächenbereich (21-1) aufweist, in dem der Zentrierzapfen (25) liegt, und dessen vorrichtungszugewandte Seite ein erstes Befestigungsmittel (21-3) hin zur Vorrichtung (11) aufweist, vorzugsweise einen ersten Gewindestift, der koaxial mit dem Zentrierzapfen (25) ausgebildet sein kann.

2. Befestigungsvorrichtung (20) zur Befestigung einer Vorrichtung (11) an einer Einrichtung (12), mit
einem vorrichtungsseitigen ersten Teil (21), das an der Vorrichtung (11) befestigbar oder befestigt oder angebracht ist und einen der Einrichtung (12) zugewandten ersten Oberflächenbereich (21-1) aufweist,
einem einrichtungsseitigen zweiten Teil (22), das an der Einrichtung (12) befestigbar oder befestigt oder angebracht ist und das am ersten Teil (21) befestigt bzw. befestigbar ist und einen der Vorrichtung (11) und dem ersten Oberflächenbereich (21-1) zugewandten zweiten Oberflächenbereich (22-1) aufweist,
wobei eines der zwei Teile mindestens einen Zentrierzapfen (25) und das andere der zwei Teile mindestens eine entsprechende Zentrieröffnung (26), in die der Zentrierzapfen (25) zur Ausrichtung der zwei Teile eindringen kann, aufweisen,
wobei auf einem der zwei Oberflächenbereiche ein oder mehrere Dämpfungselemente (24) aus nachgiebigem Material, insbesondere aus einem elastischen Material, bevorzugt Kunststoff, angebracht sind, die bei Befestigung auf dem anderen der zwei Oberflächenbereiche zur Anlage kommen, und mit einem Spannelement (23) zum gemeinsamen Einspannen der zwei Teile so, dass sie ausgerichtet und aufeinander zu gepresst gehalten werden,
**dadurch gekennzeichnet, dass**
das zweite Teil (22) einen zweiten Teller (22-2) aufweist, der eckigen oder runden oder kreisförmigen Grundriss haben kann, dessen einrichtungsabgewandte Seite den ersten Oberflächenbereich (22-1) aufweist, in dem die Zentrieröffnung (26) liegt, und dessen einrichtungszugewandte Seite ein zweites Befestigungsmittel (22-3) hin zur Einrichtung (22) aufweist, vorzugsweise einen zweiten Gewindestift, der koaxial mit der Zentrieröffnung (26) ausgebildet sein kann.

3. Befestigungsvorrichtung nach Anspruch 1 oder 2,
**dadurch gekennzeichnet, dass** der Zentrierzapfen (25) einen zur Zentrieröffnung (26) formschlüssigen und/oder komplementär ausgebildeten Oberflächenbereich aufweist, der konisch (25-2) oder zylindrisch (25-1) geformt sein kann, insbesondere kreiskonisch oder kreiszylindrisch.

4. Befestigungsvorrichtung nach Anspruch 1 oder 2 oder 3,
**dadurch gekennzeichnet, dass** der Zentrierzapfen (25) aus dem einen der zwei Oberflächenbereiche heraussteht und von ihm umgeben ist, und/oder dass die Zentrieröffnung (26) im anderen der zwei Oberflächenbereich ausgebildet und von ihm umgeben ist.

5. Befestigungsvorrichtung nach den Ansprüchen 1 und 2,
**dadurch gekennzeichnet, dass** dass das Spannelement (23) eine Schelle (40) aufweist, die in Umfangsrichtung gesehen zumindest bereichsweise um die Ränder der zwei Teller (21-2, 22-2) greift und die ein Verstellelement (46, 47) aufweist, um die Geometrie der Schelle in Radialrichtung der Teller (21-2, 22-2) ändern zu können, wobei insbesondere die Schelle (40) einen ersten Hintergriff (44a, 44b) aufweist, der den Rand des ersten Tellers (21-2) hintergreift, und einen zweiten Hintergriff (43a, 43b), der den Rand des zweiten Tellers (22-2) hintergreift, wobei der der erste Hintergriff (44a, 44b) und/oder der davon berührte Randbereich (21-4) des ersten Tellers (21-2) und/oder der zweite Hintergriff (43a, 43b) und/oder der davon berührte Randbereich des zweiten Tellers (22-2) eine Anschrägung (21-4, 45a, 45b) aufweisen kann, so dass bei Verkürzung der Schelle (40) in Umfangsrichtung der Hintergriff auf den berührten Randbereich aufgleiten kann.

6. Befestigungsvorrichtung nach Anspruch 5,
**dadurch gekennzeichnet, dass** die Schelle (40) zwei kreissektorförmige Schenkel (41, 42) aufweist, die am jeweils einen Ende beweglich miteinander verbunden sind und deren andere Enden mit einer Spanneinrichtung, insbesondere einer Schraube (46, 47) mit Schraubgewinde, aufeinander zu und voneinander weg bewegt werden können.

7. Befestigungsvorrichtung nach einem der vorherigen Ansprüche,
**dadurch gekennzeichnet, dass** das erste Teil (21) und/oder das zweite Teil (22) einen rotationssymmetrischen Aufbau haben, wobei die Rotationsachse (29) die Achse des Zentrierzapfens (25) bzw. der Zentrieröffnung (26) ist.

8. Befestigungsvorrichtung nach einem der vorherigen Ansprüche,
**dadurch gekennzeichnet, dass** das erste Teil (21) an die Vorrichtung (11) anschraubbar ist, vorzugsweise in ein Innengewinde der Vorrichtung über ein am ersten Teil (21) angebrachten Gewindebolzen mit Außengewinde, und/oder bei der das zweite Teil (22) an die Einrichtung (12) anschraubbar ist, vorzugsweise in ein Innengewinde der Einrichtung über ein am zweiten Teil (22) angebrachten Gewindebolzen mit Außengewinde.

9. Befestigungsvorrichtung nach einem der vorherigen Ansprüche,
**dadurch gekennzeichnet, dass** das nachgiebige Material den Zentrierzapfen (25) bzw. die Zentrieröffnung (26) umgebend vorgesehen ist und in einer Nut im ersten Oberflächenbereich (21-1) und/oder im zweiten Oberflächenbereich (22-1) liegt.

10. Befestigungsvorrichtung nach einem der vorherigen Ansprüche,
**dadurch gekennzeichnet, dass** das Spannelement (26, 27) handbetätigbar ist, insbesondere eine Flügelschraube oder eine Flügelmutter ist.

11. Befestigungsvorrichtung nach einem der vorherigen Ansprüche,
**dadurch gekennzeichnet, dass** der Zentrierzapfen (25) lösbar an seinem tragenden Teil angebracht ist und/oder dass der Zentrierzapfen (25) eine Baueinheit mit dem Dämpfungselement (23) ist

12. Befestigungsvorrichtung nach einem der vorherigen Ansprüche,
**gekennzeichnet durch** eine Verstelleinrichtung (13, 14, 15) für die geometrische Anpassung einer Befestigungsvorrichtung (20), insbesondere eines Befestigungsmittels (21-3, 22-3), an eine Vorrichtung oder Einrichtung.

13. Pumpenaufbau mit einer Pumpe, einem Gestell und einer oder mehreren Befestigungsvorrichtungen (20) nach einem der Ansprüche 1 bis 12 zur Befestigung der Pumpe am Gestell, wobei die Pumpe die Vorrichtung (11) ist und das Gestell die Einrichtung (12) ist und der Zentrierzapfen (25) pumpenseitig oder gestellseitig vorgesehen ist.

## Claims

1. A fastening apparatus (20) for fastening an apparatus (11) to a device (12), comprising
an apparatus-side first part (21) which is fastenable or fastened or attached to the apparatus (11) and which has a first surface region (21-1) facing the device (12);
a device-side second part (22) which is fastenable or fastened or attached to the device (12) and which is fastened or fastenable to the first part (21) and which has a second surface region (22-1) facing the apparatus (11) and the first surface region (21-1),
wherein one of the two parts has at least one centering pin (25) and the other of the two parts has at least one corresponding centering opening (26) into which the centering pin (25) can enter to align the two parts,
wherein one or more damping elements (24) composed of a resilient material, in particular of an elastic material, preferably plastic, are attached to one of the two surface regions and come into contact with the other of the two surface regions on the fastening;
and a clamping element (23) for jointly clamping the two parts so that they are held aligned and pressed toward one another,
**characterized in that**
the first part (21) has a first plate (21-2) which can have an angular or a round or a circular outline whose side remote from the apparatus has the first surface region (21-1) in which the centering pin (25) is disposed and whose side facing the apparatus has a first fastening means (21-3) toward the apparatus (11), preferably a first threaded pin which can be formed coaxially with the centering pin (25).

2. A fastening apparatus (20) for fastening an apparatus (11) to a device (12), comprising
an apparatus-side first part (21) which is fastenable or fastened or attached to the apparatus (11) and which has a first surface region (21-1) facing the device (12);
a device-side second part (22) which is fastenable or fastened or attached to the device (12) and which is fastened or fastenable to the first part (21) and which has a second surface region (22-1) facing the apparatus (11) and the first surface region (21-1),
wherein one of the two parts has at least one centering pin (25) and the other of the two parts has at least one corresponding centering opening (26) into which the centering pin (25) can enter to align the two parts,
wherein one or more damping elements (24) composed of a resilient material, in particular of an elastic material, preferably plastic, are attached to one of the two surface regions and come into contact with the other of the two surface regions on the fastening;
and a clamping element (23) for jointly clamping the two parts so that they are held aligned and pressed toward one another,
**characterized in that**
the second part (22) has a second plate (22-2) which can have an angular or a round or a circular outline whose side remote from the device has the first surface region (22-1) in which the centering opening (26) is disposed and whose side facing the device has a second fastening means (22-3) toward the device (22), preferably a second threaded pin which can be formed coaxially with the centering opening (26).

3. A fastening apparatus in accordance with claim 1 or claim 2,
**characterized in that**
the centering pin (25) has a surface region which is formed with a matching shape and/or in a complementary manner with respect to the centering opening (26) and which can have a conical shape (25-2) or a cylindrical shape (25-1), in particular a circular conical or circular cylindrical shape.

4. A fastening apparatus in accordance with claim 1 or claim 2 or claim 3,
**characterized in that**
the centering pin (25) projects from the one of the two surface regions and is surrounded by it; and/or **in that** the centering opening (26) is formed in the other one of the two surface regions and is surrounded by it.

5. A fastening apparatus in accordance with claims 1 and 2,
**characterized in that**
the clamping element (23) has a clip (40) which, viewed in the peripheral direction, engages at least regionally around the margins of the two plates (21-2, 22-2) and which has an adjustment element (46, 47) to be able to change the geometry of the clip in the radial direction of the plates (21-2, 22-2), with the clip (40) in particular having a first rear grip (44a, 44b) which engages behind the margin of the first plate (21-2) and a second rear grip (43a, 43b) which engages behind the margin of the second plate (22-2), with the first rear grip (44a, 44b) and/or the marginal region (21-4) of the first plate (21-2) contacted by it and/or the second rear grip (43a, 43b) and/or the marginal region of the second plate (22-2) contacted by it being able to have a chamfer (21-4, 45a, 45b) so that the rear grip can slide onto the contacted marginal region when the clip (40) is shortened in the peripheral direction.

6. A fastening apparatus in accordance with claim 5,
**characterized in that**
the clip (40) has two limbs (41, 42) which have the shape of a circle sector, which are movably connected to one another at one end in each case and whose other ends can be moved toward one another and away from one another by a clamping device, in particular a screw (46, 47) comprising a screw thread.

7. A fastening apparatus in accordance with any one of the preceding claims,
**characterized in that**
the first part (21) and/or the second part (22) has/have a rotationally symmetrical design, with the axis of rotation (29) being the axis of the centering pin (25) or of the centering opening (26).

8. A fastening apparatus in accordance with any one of the preceding claims,
**characterized in that**
the first part (21) can be screwed to the apparatus (11), preferably into an internal thread of the apparatus, via a threaded bolt which is attached to the first part (21) and which has an external thread; and/or **in that** the second part (22) can be screwed to the device (12), preferably into an internal thread of the device, via a threaded bolt which is attached to the second part (22) and which has an external thread.

9. A fastening apparatus in accordance with any one of the preceding claims,
**characterized in that**
the resilient material is provided surrounding the centering pin (25) or the centering opening (26) and is disposed in a groove in the first surface region (21-1) and/or in the second surface region (22-1).

10. A fastening apparatus in accordance with any one of the preceding claims,
**characterized in that**
the clamping element (26, 27) is manually actuable and is in particular a wing screw or a wing nut.

11. A fastening apparatus in accordance with any one of the preceding claims,
**characterized in that**
the centering pin (25) is releasably attached to its supporting part; and/or **in that** the centering pin (25) is an assembly having the damping element (23).

12. A fastening apparatus in accordance with any one of the preceding claims, **characterized by** an adjustment device (13, 14, 15) for the geometric adaptation of a fastening apparatus (20), in particular of a fastening means (21-3, 22-3), to an apparatus or a device.

13. A pump structure comprising a pump; a frame; and one or more fastening apparatus (20) in accordance with any one of the claims 1 to 12 for fastening the pump to the frame, wherein the pump is the apparatus (11) and the frame is the device (12) and the centering pin (25) is provided at the pump side or at the frame side.

## Revendications

1. Dispositif de fixation (20) pour fixer un dispositif (11) sur une installation (12), comportant
une première partie (21) côté dispositif, qui peut être fixée ou est fixée ou est montée sur le dispositif (11) et qui présente une première zone de surface (21-1) tournée vers l'installation (12),
une deuxième partie (22) côté installation, qui peut être fixée ou est fixée ou est montée sur l'installation (12) et qui est fixée ou peut être fixée sur la première partie (21) et qui présente une deuxième zone de surface (22-1) tournée vers le dispositif (11) et vers la première zone de surface (21-1), dans lequel
l'une des deux parties présente au moins un tourillon de centrage (25) et l'autre des deux parties présente au moins une ouverture de centrage correspondante (26) dans laquelle le tourillon de centrage (25) peut entrer pour aligner les deux parties,
un ou plusieurs éléments d'amortissement (24) en matériau souple, en particulier en une matériau élastique, de préférence en matière plastique, sont montés sur l'une des deux zones de surface, qui viennent en appui sur l'autre des deux zones de surface lors de la fixation,
et comportant un élément de serrage (23) pour serrer les deux parties ensemble de manière à ce qu'elles soient maintenues alignées et pressées l'une contre l'autre,
**caractérisé en ce que**
la première partie (21) comprend un premier plateau (21-2) qui peut avoir un contour angulaire ou rond ou circulaire, dont le côté détourné du dispositif comprend la première zone de surface (21-1) dans laquelle se trouve le tourillon de centrage (25), et dont le côté tourné vers le dispositif comprend un premier moyen de fixation (21-3) vers le dispositif (11), de préférence une première tige filetée, qui peut être réalisé(e) coaxialement avec le tourillon de centrage (25).

2. Dispositif de fixation (20) pour fixer un dispositif (11) sur une installation (12), comportant
une première partie (21) côté dispositif, qui peut être fixée ou est fixée ou est montée sur le dispositif (11) et qui présente une première zone de surface (21-1) tournée vers l'installation (12),
une deuxième partie (22) côté installation, qui peut être fixée ou est fixée ou est montée sur l'installation (12) et qui est fixée ou peut être fixée sur la première partie (21), et qui présente une deuxième zone de surface (22-1) tournée vers le dispositif (11) et vers la première zone de surface (21-1), dans lequel
l'une des deux parties présente au moins un tourillon de centrage (25) et l'autre des deux parties présente au moins une ouverture de centrage correspondante (26) dans laquelle le tourillon de centrage (25) peut entrer pour aligner les deux parties,
un ou plusieurs éléments d'amortissement (24) en matériau souple, en particulier en une matériau élastique, de préférence en matière plastique, sont montés sur l'une des deux zones de surface, qui viennent en appui sur l'autre des deux zones de surface lors de la fixation,
et comportant un élément de serrage (23) pour serrer les deux parties ensemble de manière à ce qu'elles soient maintenues alignées et pressées l'une contre l'autre,
**caractérisé en ce que**
la deuxième partie (22) comprend un deuxième plateau (22-2) qui peut avoir un contour angulaire ou rond ou circulaire, dont le côté détourné de l'installation comprend la première zone de surface (22-1) dans laquelle se trouve l'ouverture de centrage (26), et dont le côté tourné vers l'installation comprend un deuxième moyen de fixation (22-3) vers l'installation (22), de préférence une deuxième tige filetée, qui peut être réalisé(e) coaxialement avec l'ouverture de centrage (26).

3. Dispositif de fixation selon la revendication 1 ou 2,
**caractérisé en ce que**
le tourillon de centrage (25) présente une zone de surface qui est réalisée en coopération de forme et/ou de façon complémentaire par rapport à l'ouverture de centrage (26) et qui peut être de forme conique (25-2) ou cylindrique (25-1), en particulier en forme de cône circulaire ou de cylindre circulaire.

4. Dispositif de fixation selon la revendication 1 ou 2 ou 3,
**caractérisé en ce que**
le tourillon de centrage (25) fait saillie de l'une des deux zones de surface et est entouré par celle-ci, et/ou **en ce que**
l'ouverture de centrage (26) est ménagée dans l'autre des deux zones de surface et est entourée par celle-ci.

5. Dispositif de fixation selon les revendications 1 et 2,
**caractérisé en ce que**
l'élément de serrage (23) comprend un collier (40) qui, vu dans la direction circonférentielle, s'engage au moins localement autour des bords des deux plateaux (21-2, 22-2) et qui comprend un élément de réglage (46, 47), afin de pouvoir modifier la géométrie du collier dans la direction radiale des plateaux (21-2, 22-2), le collier (40) comprenant en particulier un premier engagement par l'arrière (44a, 44b) qui engage par l'arrière le bord du premier plateau (21-2), et un deuxième engagement par l'arrière (43a, 43b) qui engage par l'arrière le bord du deuxième plateau (22-2), le premier engagement par l'arrière (44a, 44b) et/ou la zone de bord (21-4) du premier plateau (21-2) en contact avec celui-ci et/ou le deuxième engagement par l'arrière (43a, 43b) et/ou la zone de bord du deuxième plateau (22-2) en contact avec celui-ci peut présenter un chanfrein (21-4, 45a, 45b) de sorte que, lors d'un raccourcissement du collier (40) en direction circonférentielle, l'engagement par l'arrière peut glisser sur la zone de bord en contact avec celui-ci.

6. Dispositif de fixation selon la revendication 5,
**caractérisé en ce que**
le collier (40) comprend deux branches (41, 42) en forme de secteur de cercle qui sont reliées l'une à l'autre de manière mobile à une extrémité respective et dont les autres extrémités peuvent être rapprochées et éloignées l'une de l'autre au moyen d'un organe de serrage, en particulier au moyen d'une vis (46, 47) pourvue d'un pas de vis.

7. Dispositif de fixation selon l'une des revendications précédentes,
**caractérisé en ce que**
la première partie (21) et/ou la deuxième partie (22) présente(nt) une structure à symétrie de révolution, l'axe de rotation (29) étant l'axe du tourillon de centrage (25) ou de l'ouverture de centrage (26).

8. Dispositif de fixation selon l'une des revendications précédentes,
**caractérisé en ce que**
la première partie (21) peut être vissée au dispositif (11), de préférence dans un taraudage du dispositif via un boulon fileté pourvu d'un filetage et monté sur la première partie (21), et/ou
la deuxième partie (22) peut être vissée à l'installation (12), de préférence dans un taraudage de l'installation via un boulon fileté pourvu d'un filetage et monté sur la deuxième partie (22).

9. Dispositif de fixation selon l'une des revendications précédentes,
**caractérisé en ce que**
le matériau souple est prévu de manière à entourer le tourillon de centrage (25) ou l'ouverture de centrage (26) et est situé dans une rainure dans la première zone de surface (21-1) et/ou dans la deuxième zone de surface (22-1).

10. Dispositif de fixation selon l'une des revendications précédentes,
**caractérisé en ce que**
l'élément de serrage (26, 27) est actionnable manuellement et est en particulier une vis à ailettes ou un écrou à ailettes.

11. Dispositif de fixation selon l'une des revendications précédentes,
**caractérisé en ce que**
le tourillon de centrage (25) est fixé de manière amovible sur sa partie porteuse, et/ou **en ce que**
le tourillon de centrage (25) est une unité structurelle avec l'élément d'amortissement (23).

12. Dispositif de fixation selon l'une des revendications précédentes,
**caractérisé par**
un dispositif de réglage (13, 14, 15) pour adapter géométriquement un dispositif de fixation (20), en particulier un moyen de fixation (21-3, 22-3), à un dispositif ou à une installation.

13. Ensemble de pompe comprenant une pompe, un bâti et un ou plusieurs dispositifs de fixation (20) selon l'une des revendications 1 à 12 pour fixer la pompe sur le bâti, la pompe étant le dispositif (11) et le bâti étant l'installation (12) et le tourillon de centrage (25) étant prévu du côté pompe ou du côté bâti.
